# EUROPEAN PATENT APPLICATION

(11) **EP 4 607 261 A1**
(43) Date of publication of application: **27.08.2025**
(21) Application number: 24209972.9
(22) Date of filing: 30.10.2024
(51) Int. Cl.: G02B 27/00, G06F 3/03

(54) **OPTICAL TRACKING DEVICE**

(30) Priority: 26.02.2024 US 202463557597 P; 09.09.2024 US 202418827853
(71) Applicant: HTC Corporation, Taoyuan City 330, (TW)
(72) Inventor: CHEN, BO-JUN, 330 Taoyuan City (TW); Chung, Chih Pin, 330 Taoyuan City (TW); HSIEH, HSIEN-JU, 330 Taoyuan City (TW)
(74) Representative: 2K Patentanwälte Blasberg Kewitz & Reichel

(57) **Abstract**

An embodiment of an optical tracking device includes a circuit board, a sensing light source, a light shielding plate, and a light path reconstruction structure. The sensing light source is electrically connected to the circuit board and is configured to emit sensing light. The light shielding plate is disposed on the sensing light source, and the light path reconstruction structure overlaps the sensing light source. The light path reconstruction structure has a first surface facing the sensing light source and a second surface away from the sensing light source. The first surface has a first micro structure, and the second surface has a second micro structure. The sensing light passes through the first micro structure and the second micro structure in sequence after being emitted from the sensing light source.

## Description

### CROSS-REFERENCE TO RELATED APPLICATION

This application claims the priority benefit of U.S. provisional application serial no. 63/557,597, filed on February 26, 2024. The entirety of the above-mentioned patent application is hereby incorporated by reference herein and made a part of this specification.

### BACKGROUND

### Technical Field

The disclosure relates to an optical device, and particularly to an optical tracking device.

### Description of Related Art

With the development of technology, more and more electronic products need to determine the distance, position, or direction (such as electric vehicles, smart home appliances, wearable devices, etc.) between the electronic products and the surrounding environment or users by adopting tracking systems. In the tracking system, an optical tracking method has an advantage of long sensing distance. However, in an optical tracking system, how to improve sensing stability while simultaneously reducing the cost of the optical tracking system remains a challenge that relevant manufacturers wish to solve.

### SUMMARY

The disclosure provides an optical tracking device which effectively reduces the proportion of stray light of sensing light, so that the sensing light has good sharpness, reduces the probability of misjudgment by the tracking device, and further increases sensing stability.

An embodiment of an optical tracking device of the disclosure includes a circuit board, a sensing light source, a light shielding plate, and a light path reconstruction structure. The light shielding plate is disposed on the sensing light source, and the light path reconstruction structure overlaps the sensing light source. The light path reconstruction structure has a first surface facing the sensing light source and a second surface away from the sensing light source. The first surface has a first micro structure, and the second surface has a second micro structure. The sensing light passes through the first micro structure and the second micro structure in sequence after being emitted from the sensing light source.

Based on the above, the optical tracking device of the disclosure utilizes the light shielding plate disposed on the sensing light source, and makes the light path reconstruction structure overlap the sensing light source. The light shielding effect of the light shielding plate may block an unexpected light emission region and absorb the stray light, and the light path reconstruction structure is installed at a light emission port of the sensing light. Furthermore, the micro structures of the surfaces of the light path reconstruction structure may cause diffusion and reconstruction when the sensing light passes through the micro structures, which is equivalent to effectively moving the position of the sensing light source to the position of the light path reconstruction structure. Therefore, the path of the stray light arbitrarily penetrating, reflecting, and scattering in other components may be eliminated, avoiding a light spot image appearing at an incorrect position, preventing interference and misjudgment of the tracking device, and improving the accuracy of optical tracking effects to avoid misjudgment.

To make the aforementioned features and advantages of the disclosure comprehensible, exemplary embodiments are described below with detailed explanations in conjunction with the accompanying drawings.

### BRIEF DESCRIPTION OF THE DRAWINGS

FIG. 1 is a schematic view of an optical structure of an optical tracking device according to an embodiment of the disclosure.
FIG. 2A and FIG. 2B are respectively an exploded view and a detailed structural view of the optical tracking device of the embodiment in FIG. 1.
FIG. 3 is a schematic view of an optical structure of an optical tracking device according to an embodiment of the disclosure.
FIG. 4A and FIG. 4B are respectively a schematic view of an optical structure of an optical tracking device of a comparative embodiment and a schematic view of stray light generation.

### DESCRIPTION OF THE EMBODIMENTS

Considering the particular amount of measurement and measurement-related errors discussed (i.e., the limitations of the measurement system), the terminology "about," "approximately," "essentially," or "substantially" used herein includes the average of the stated value and an acceptable range of deviations from the particular value as determined by those skilled in the art. For instance, the terminology "about" may refer to as being within one or more standard deviations of the stated value, or within ±30%, ±20%, ±15%, ±10%, or ±5%. Furthermore, the terminology "about," "approximately," "essentially," or "substantially" as used herein may be chosen from a range of acceptable deviations or standard deviations depending on the optical properties, etching properties, or other properties, rather than one standard deviation for all properties.

In the accompanying drawings, the thickness of layers, films, panels, regions, and so forth are enlarged for clarity. It should be understood that when an element, such as a layer, a film, a region, or a substrate is referred to as being "on" or "connected to" another element, it can be directly on or connected to the another element, or an intermediate element may also be present. By contrast, when an element is referred to as being "directly on" or "directly connected to" another element, no intermediate element is present. As used herein, being "connected" may refer to a physical and/or electrical connection. Furthermore, being "electrically connected" may refer to the presence of other elements between the two elements.

Reference will now be made in detail to the exemplary embodiments of the disclosure, examples of which are illustrated in the accompanying drawings. Whenever possible, the same reference numerals are used in the drawings and the description to refer to the same or like parts.

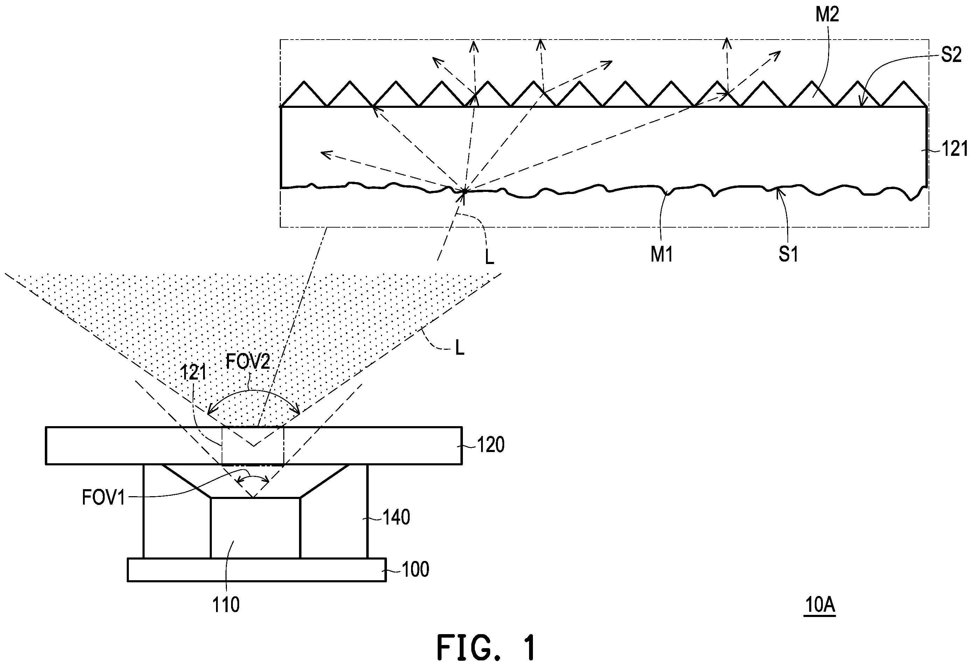

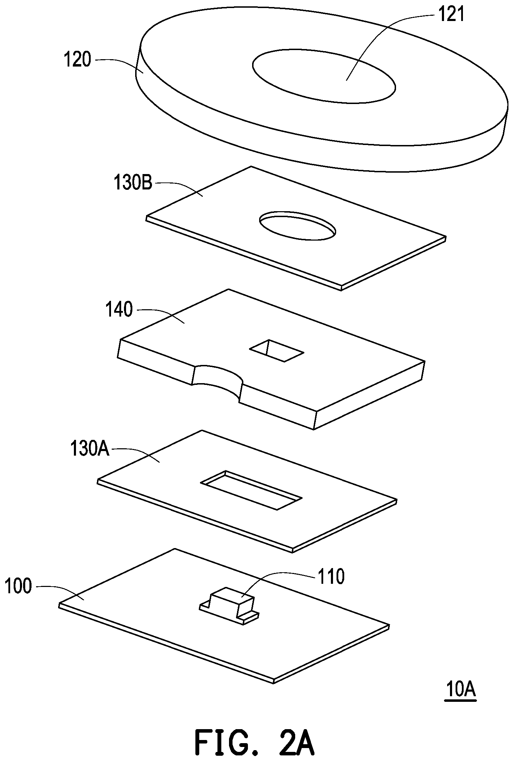

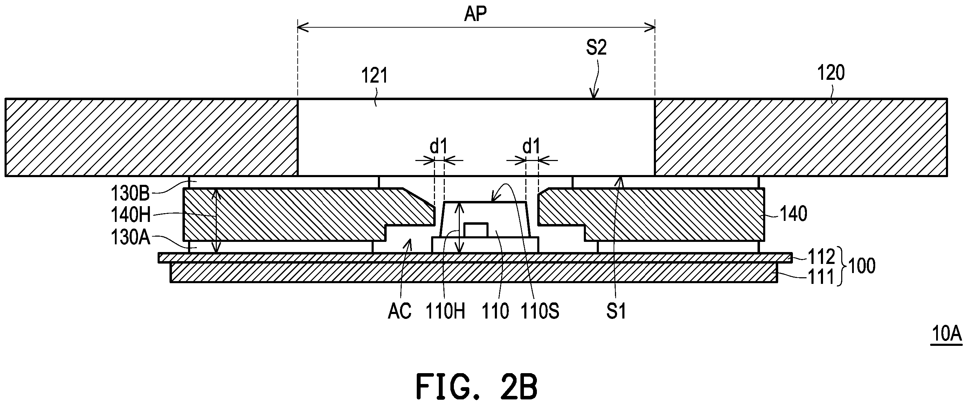

FIG. 1 is a schematic view of an optical structure of an optical tracking device according to an embodiment of the disclosure. FIG. 2A and FIG. 2B are respectively an exploded view and a detailed structural view of the optical tracking device of the embodiment in FIG. 1. Please refer to FIG. 1, FIG. 2A, and FIG. 2B together. An optical tracking device 10A includes a circuit board 100, a sensing light source 110, a light shielding plate 120, and a light path reconstruction structure 121 disposed on the light shielding plate 120. The sensing light source 110 is electrically connected to the circuit board 100 and is configured to provide sensing light L. The optical tracking device 10A may further include an optical sensor (for example, a camera) and a processor (both not shown). When light emitted from the sensing light L reaches the optical sensor (for example, the camera) of the optical tracking device 10A through reflection and refraction, the optical sensor converts the received sensing light L into an electrical signal. The processor may receive the electrical signal to determine information about a target object, such as a change in a position of the target object, a surface shape of the target object, or a movement path of the target object, etc., which is not limited by the disclosure.

The circuit board 100 may further include a substrate 111 and a circuit layer 112. The substrate 111 may be, for example, a printed circuit board (PCB) or a flexible printed circuit (FPC) with flexibility, but the disclosure is not limited to thereto. In other embodiments, the substrate 111 may be a solid glass substrate or a plastic substrate. The circuit layer 112 may include various signal lines, switching elements, driving circuits, and boding pads (all not shown) and be configured to provide and transmit the electrical signal to the sensing light source 110 so as to control the sensing light source 110 to emit the sensing light L. The sensing light source 110 may be different light sources such as a light emitting diode (LED) or a laser diode (LD), and a wavelength range of the sensing light L emitted by the sensing light source 110 may be in a visible light band (for example, a wavelength between 380nm to 750nm) or in a near-infrared to infrared light band (for example, a wavelength above 750nm or a wavelength above 1054nm), which is not limited by the disclosure.

The light shielding plate 120 is disposed on the sensing light source 110. The light shielding plate 120 may include, but is not limited to, a dark material (such as black), a high optical density material (for example, an optical density (OD) value > 0.5), a material with low transmittance for the sensing light L (for example, transmittance < 30%), or a material with high absorption rate for the sensing light L, and also serves the functions of protection and aesthetics. The light path reconstruction structure 121 overlaps the configuration of the sensing light source 110. For example, as shown in FIG. 2A and FIG. 2B, the light path reconstruction structure 121 may have an aperture AP overlapping the sensing light source 110 in the projection on the circuit board 100. The material texture of the light path reconstruction structure 121 may be, for example, a plastic material with high transmittance and low absorption rate for the sensing light L, such as polyethylene terephthalate (PET), polymethylmethacrylate (PMMA), polystyrene (PS), or polycarbonate (PC), but the disclosure is not limited thereto.

It is worth mentioning that the light path reconstruction structure 121 has a first surface S1 facing the sensing light source 110, and a second surface S2 away from the sensing light source 110. The first surface S1 has a first micro structure M1, and the second surface S2 has a second micro structure M2, so that the sensing light L passes through the first micro structure M1 and the second micro structure M2 after being emitted from the sensing light source 110.

For example, the first micro structure M1 may be an uneven surface or multiple prism structures formed on the first surface S1 of the light path reconstruction structure 121 via sandblasting process or surface frosting treatment. The second micro structure M2 may include multiple prism structures or an uneven surface formed via sandblasting process or surface frosting treatment. In the embodiment where the second micro structure M2 includes the prism structures, the material texture of the second micro structure M2 may be the same as or different from the material texture of the light path reconstruction structure 121, including, for instance, UV glue or other suitable materials, which is not limited by the disclosure.

When the sensing light source 110 emits the sensing light L, the sensing light L may have a first field of view FOV1. Due to a light shielding effect of the light shielding plate 120, part of the sensing light L may not pass through the light shielding plate 120, and is blocked, which prevents the sensing light L from being unexpectedly refracted, reflected, or diffused within the light shielding plate 120, avoids the sensing light L from ultimately appearing at an unexpected position, and reduces the chance of generating stray light. Moreover, most of the sensing light L is transmitted out of the optical tracking device 10A from a position of the light path reconstruction structure 121 overlapping the sensing light source 110. The result may reduce the chance of misjudgment by the optical tracking device 10A, thereby increasing the accuracy of the optical tracking device 10A.

Furthermore, when the sensing light L is transmitted to the first micro structure M1 of the first surface S1, the first micro structure M1 may cause a refraction path of the sensing light L to be reconstructed. That is, the light emission direction of the sensing light L is randomly distributed, resulting in a second field of view FOV2 larger than the first field of view FOV1. The effect is equivalent to having a point light source located at the position of the light path reconstruction structure 121. In other words, the light path reconstruction structure 121 effectively moves the position of the sensing light source 11 to the position of the light path reconstruction structure 121. In another aspect, through the refraction effect of the second micro structure M2, the sensing light L may be easily captured by the optical sensor when being projected at a large angle, which enhances the tracking effect of the optical tracking device 10A. Both the light shielding plate 120 and the light path reconstruction structure 121 may be manufactured by using a plastic injection molding method, which does not require high production costs and may achieve low-cost mass production. Therefore, the optical tracking device 10A of the disclosure has a simple structure, easy production, an advantage of overall device miniaturization, and high optical tracking accuracy.

Please continue to refer to FIG. 2A and FIG. 2B. The optical tracking device 10A may further include a spacer 140 disposed between the circuit board 100 and the light shielding plate 120. The spacer 140 may have an accommodation space AC, and the sensing light source 110 is disposed in the accommodation space AC. The spacer 140 is configured to maintain an appropriate distance between the light shielding plate 120 and the circuit board 100, avoiding collision between the light shielding plate 120 or the light path reconstruction structure 121 and the sensing light source 110 when the optical tracking device 10A is subjected to external force impact. Based on the above, a height 140H of the spacer 140 on the circuit board 100 may be greater than a height 110H of the sensing light source 110 on the circuit board 100. The height 140H may be defined as a distance from an upper surface of the spacer 140 to an upper surface of the circuit board 100, and the height 110H may be defined as a distance from a light surface 110S of the sensing light source 110 to the upper surface of the circuit board 100. In some embodiments, an appropriate spacing d1 may be maintained between the spacer 140 and the sensing light source 110 (for example, in the plane direction of the circuit board 100, a ratio of the spacing d1 to a width of the sensing light source 110 > 0.2) to allow for slight process tolerances, providing a certain assembly margin. A material of the spacer 140 may be, for example, plastic or metal, which is not limited by the disclosure. In some embodiments, the spacer 140 may have an appropriate reflectance, allowing the sensing light L to be reflected back to the light path reconstruction structure 121 when being projected onto a side wall of the spacer 140, thereby increasing a light energy utilization rate of the sensing light L.

In another aspect, the optical tracking device 10A may further include a first adhesion layer 130A and a second adhesion layer 130B. The first adhesion layer 130A is disposed between the spacer 140 and the circuit board 100, and is configured to adhere the spacer 140 and the circuit board 100 to each other. The second adhesion layer 130B is disposed between the spacer 140 and the light shielding plate 120, and is configured to adhere the spacer 140 and the light shielding plate 120 to each other. In another perspective, on the projection plane of the circuit board 100, the first adhesion layer 130A, the second adhesion layer 130B, and the spacer 140 all surround the sensing light source 110. It may also be understood that the first adhesion layer 130A, the second adhesion layer 130B, and the spacer 140 jointly create the accommodation space AC to place the sensing light source 110. The first adhesion layer 130A and the second adhesion layer 130B may be, for example, pressure sensitive adhesive (PSA), and have a certain absorption rate or reflectance to the sensing light L, to reduce the proportion of light leakage of the sensing light L from the first adhesion layer 130A and the second adhesion layer 130B, or to increase the light energy utilization rate of the sensing light L, which is not limited by the disclosure. In other embodiments, the first adhesion layer 130A and the second adhesion layer 130B may also be other types of adhesives or adhesion layers.

Other embodiments are listed below for detailed description, where the same reference numerals are configured to represent the same or similar elements, and the description of the same technical content is omitted. For the description of the omitted parts, reference may be made to the above embodiments, which is not repeated in the following embodiments.

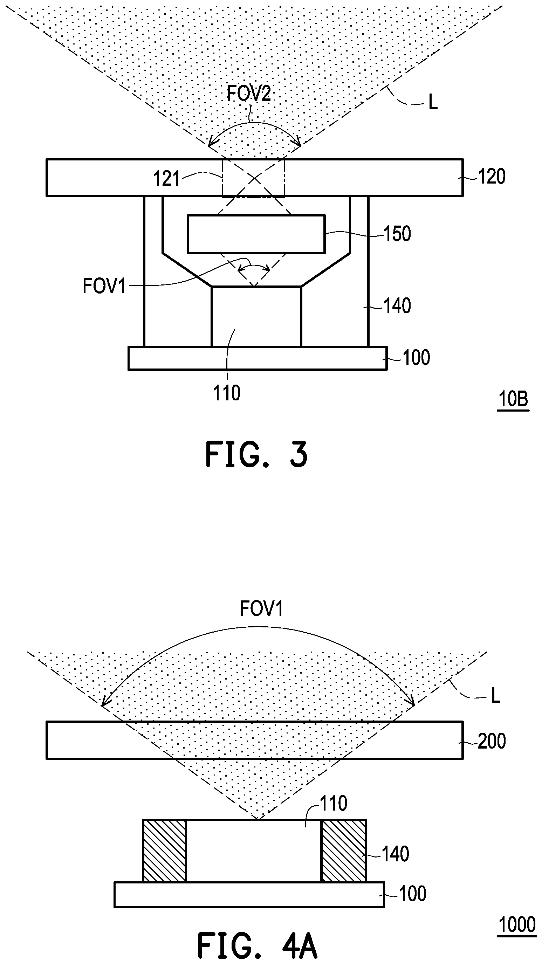

FIG. 3 is a schematic view of an optical structure of an optical tracking device according to an embodiment of the disclosure. Please refer to FIG. 3. An optical tracking device 10B is similar to the optical tracking device 10A. The difference lies in that the optical tracking device 10B further includes an optical element 150 disposed between the light path reconstruction structure 121 and the sensing light source 110. The optical element 150 may be, for example, a plastic lens or a glass lens with positive refraction, or other optical elements with light-focusing function. When being emitted from the sensing light source 110, the sensing light L has the first field of view FOV1. The optical element 150 may recollect the sensing light L and focus the sensing light L onto the light path reconstruction structure 121, facilitating the sensing light L to be guided out of the light path reconstruction structure 121. Furthermore, the light path reconstruction structure 121 may reconstruct the sensing light L again, so that the sensing light L has a larger second field of view FOV2 when leaving the optical tracking device 10B. In this way, the optical element 150 may increase the light energy utilization rate of the sensing light L and also indirectly enhance the intensity of the sensing light L.

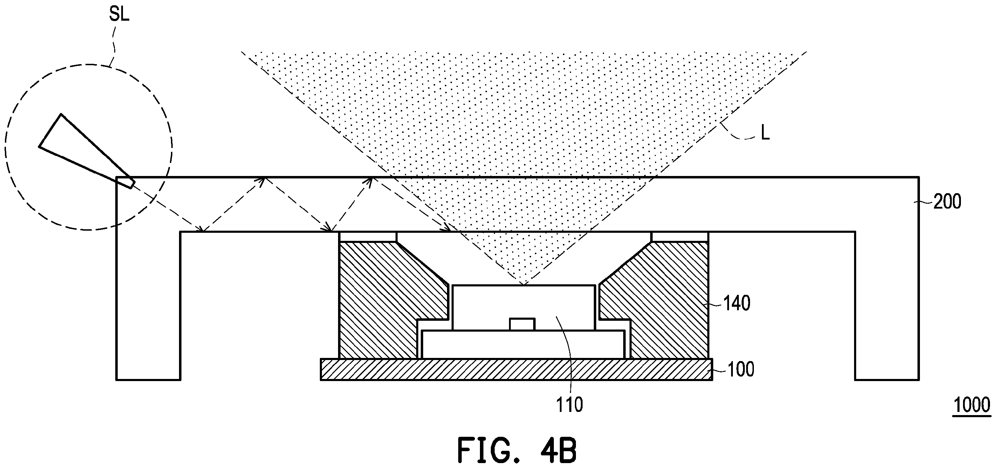

FIG. 4A and FIG. 4B are respectively a schematic view of an optical structure of an optical tracking device of a comparative embodiment and a schematic view of stray light generation. Please refer to FIG. 4A and FIG. 4B together. As a comparative example, an optical tracking device 1000 may have a circuit board 100, a sensing light source 110, a spacer 140, and a transparent cover plate 200. When a display light L emitted from the sensing light source 110 is transmitted to the transparent cover plate 200, unexpected refraction, reflection, and diffusion of the display light L within the transparent cover plate 200 may be easily caused, which may easily generate dispersed stray light SL at the edge of the transparent cover plate 200. Eventually, a light spot image formed by the stray light SL may appear at an unexpected position, and there may be other uneven stray light spots, which causes misjudgment of the tracking device. Conversely, the optical tracking device 10A (or the optical tracking device 10B) according to embodiment of the disclosure may effectively solve the aforementioned problems and increase the accuracy of optical tracking.

In summary, the optical tracking device of the disclosure utilizes the light shielding plate disposed on the sensing light source, and makes the light path reconstruction structure overlap the sensing light source. The light shielding effect of the light shielding plate may block an unexpected light emission region and absorb the stray light, and the light path reconstruction structure is installed at a light emission port of the sensing light. Furthermore, the micro structures of the surfaces of the light path reconstruction structure may cause diffusion when the sensing light passes through the micro structures, which is equivalent to effectively moving the position of the sensing light source to the position of the light path reconstruction structure. Therefore, the path of the stray light arbitrarily penetrating, reflecting, and scattering in other components may be eliminated effectively, avoiding the light spot image appearing at an incorrect position, preventing interference and misjudgment of the tracking device, and improving the accuracy of the optical tracking effect to avoid misjudgment.

Although the disclosure has been disclosed in the above implementations, it is not intended to limit the disclosure. Any person with ordinary skill in the relevant technical field may make some modifications and refinements without departing from the spirit and scope of the disclosure. Therefore, the scope of protection of the disclosure shall be defined by the appended claims.

## Claims

1. An optical tracking device, comprising:
a circuit board;
a sensing light source, electrically connected to the circuit board and configured to emit sensing light; and
a light shielding plate, disposed on the sensing light source, and comprising a light path reconstruction structure overlapping the sensing light source, wherein the light path reconstruction structure has a first surface facing the sensing light source, and a second surface away from the sensing light source,
wherein the first surface has a first micro structure, the second surface has a second micro structure, and the sensing light passes through the first micro structure and the second micro structure in sequence after being emitted from the sensing light source.

2. The optical tracking device according to claim 1, wherein the first micro structure is an uneven surface or a plurality of prism structures.

3. The optical tracking device according to claim 1, wherein the second micro structure comprises a plurality of prism structures or is an uneven surface.

4. The optical tracking device according to claim 1, further comprising:
a spacer, disposed between the circuit board and the light shielding plate, wherein the spacer has an accommodation space, and the sensing light source is disposed in the accommodation space.

5. The optical tracking device according to claim 4, further comprising:
a first adhesion layer, disposed between the spacer and the circuit board; and
a second adhesion layer, disposed between the spacer and the light shielding plate.

6. The optical tracking device according to claim 5, wherein a height of the spacer on the circuit board is greater than a height of the sensing light source on the circuit board.

7. The optical tracking device according to claim 5, wherein there is a spacing between the spacer and the sensing light source.

8. The optical tracking device according to claim 5, wherein the first adhesion layer, the second adhesion layer, and the spacer all surround the sensing light source on a projection plane of the circuit board.

9. The optical tracking device according to claim 1, wherein the light shielding plate has a transmittance less than or equal to 30% for the sensing light.

10. The optical tracking device according to claim 1, further comprising an optical element disposed between the light path reconstruction structure and the sensing light source.
